# EUROPEAN PATENT APPLICATION

(11) **EP 1 473 316 A1**
(43) Date of publication of application: **03.11.2004**
(21) Application number: 03700497.5
(22) Date of filing: 08.01.2003
(51) Int. Cl.: C08G 63/90

(54) **METHOD OF TREATING POLYESTER POLYMER AND POLYESTER POLYMER REDUCED IN LOW-BOILING COMPONENT CONTENT**

(30) Priority: 11.01.2002 JP 2002005390
(71) Applicant: DAICEL CHEMICAL INDUSTRIES, Ltd., Sakai-shi, Osaka 590-0905 (JP)
(72) Inventor: WATANABE, Jun, Ohtake-shi, Hiroshima 739-0651 (JP)
(74) Representative: Pfau, Anton Konrad, Dr.
(86) International application number: PCT/JP2003/000085
(87) International publication number: WO 2003/059986

(57) **Abstract**

A method for treating a polyester polymer according to the present invention is toheat apolyesterpolymer (C) , which is obtained by ring-opening polymerization of a polymer (A) having hydroxyl and/or ester bonds and cyclic esters (B) containing ε-caprolactone, in a solid state at a temperature that is not lower than 115°C and lower than 170°C and is lower than the melting point of the polyester polymer (C) in order to remove an organic low-boiling component (v) from the polymer (C) obtained by the polymerization. According to the present invention, there is obtained a polyester polymer in which ε-caprolactone and caprolactone dimer in polyester polymers are fully removed without causing deterioration or change of the physical properties of resins and further without causing deterioration of their colors and a decrease in cost effectiveness.

## Description

### TECHNICAL FIELD

The present invention relates to a method for treating polyester polymers by flowing heated gas through a polyester polymer, which is obtained by ring-opening polymerization of cyclic esters containing ε-caprolactone with a polymer having hydroxyl groups and/or ester bonds, in a solid state such as in the form of powder to remove organic low-boiling components (hereinafter, abbreviated as "low-boiling components"), and to a polyester polymer having a significantly reduced content of low-boiling components.

### BACKGROUND ART

Block copolymers obtained by ring-opening polymerization of ε-caprolactone with a polyester polymer, for example, a crystalline aromatic polyester, have rubber elasticity and high heat resistance and hence they are widely used for various molded articles, films, threads, impact strength modifiers for polyesters, and compatibilizer for polyester alloys.

However, the block copolymers generally contain low-boiling components such as an unreacted ε-caprolactone at the time when the reaction was completed, so that occurrence of problems such as monomer smell has been pointed out.

For this reason, removal of the low-boiling components from the block copolymers has been studied. Polycaprolactone, which is a homopolymer of ε-caprolactone, has a melting point of as low as about 60°C, so that there is conventionally no need to treat the block copolymers in a solid state in order to remove the remaining monomers. In actuality, in some cases the block polymers have been treated at very low temperatures, for example, 40°C for the removal of moisture. However, it has been difficult to sufficiently remove monomers even when such treatment is performed for a long period of time.

As a method for removing remaining monomers in the polyester block copolymers obtained by ring-opening polymerization between crystalline aromatic polyesters and lactones, JP 52-49037 B, JP 8-9661 B, JP 7-76263 B, and JP 3-263425 A each disclose a method for removing monomers under reduced pressure at a temperature not lower than the melting point thereof. In each of these methods, reduced pressure treatment is performed in a molten state. However, although the obtained resins have reduced monomer smell, they still contain monomers at high concentrations. Moreover, due to the treatment at high temperatures, the heat affects the resins greatly, so that the physical properties and color of resins are deteriorated.

On the other hand, JP 60-31525 A and JP 5-23290 B disclose methods for producing polymers having increased molecular weights, in which polyester block copolymers obtained by ring-opening polymerization between crystalline aromatic polyesters and lactones are further polymerized at a temperature not higher than the melting point thereof, i.e., 170 to 215°C in a solid phase. Both of the methods involve heat treatment under vacuum or under flow of a gas. However, for the polycondensation reaction to efficiently proceed, these methods require not only very high temperatures, although not higher than the melting point, but also treatment for a long period of time. Such treatment causes problems such as coloring and deterioration of resins despite being in a solid state. Thus, when polymerization in a solid phase is performed under flow of a gas, it is necessary to use very highly purified nitrogen gas, with a result that there needs to be set economically disadvantageous conditions including treating temperature and treating time. In addition, where the polycondensation reaction is performed aggressively in a solid state, unevenness occurs in the inside of the resin because of differences in the progress of polycondensation reaction between the surface of the solid and deeper parts thereof. This unevenness causes a change in, for example, the molecular weight, molecular weight distribution, acid value, etc. of the resins. Furthermore, due to the solid state shape, the temperature, and the gas flow rate which are essentially not completely uniform, it is difficult to maintain the progress of reaction at a constant level inside a lot and between lots.

In addition, heat-melting polyester polymers under the condition where moisture is present at a high concentration causes the physical properties of the resin to deteriorate due to hydrolysis and hence usually drying is performed in order to remove the moisture. However, for such drying process, usually the most economical conditions are selected so far as the hydrolysis does not significantly affect the moldability of resin. Generally, the drying is performed so that the concentration of moisture becomes 100 ppm or less. Under such a condition, it is difficult to sufficiently remove remaining monomers and in particular components having higher melting points such as ε-caprolactone dimer (hereinafter, referred to simply as "caprolactone dimer").

### DISCLOSURE OF THE INVENTION

Therefore, an obj ect of the present invention is to fully remove ε-caprolactone and caprolactone dimer in polyester polymers without causing deterioration or change of the physical properties of resins and further without causing deterioration of their colors and a decrease in cost effectiveness.

The inventors of the present invention have made extensive studies on a treating method for decreasing remaining ε-caprolactone and caprolactone dimer in a polyester polymer (C) obtained by ring-opening polymerization of ε-caprolactone-containing cyclic esters with a polymer having hydroxyl groups and/or ester bonds. As a result, the inventors have found that the above-mentioned obj ect can be achieved by flowing a gas (g) , which is heated to a temperature that is lower than the melting point of the polymer (C) and is within a specific low temperature range, to the polymer (C) in a solid state to entrain and remove organic low-boiling components (v) from the polymer (C), thereby completing the present invention.

Therefore, according to a first aspect of the present invention, there is provided a method for treating a polyester polymer which comprises heating a polyester polymer (C), which is obtained by ring-opening polymerization of a polymer (A) having hydroxyl and/or ester bonds and cyclic esters (B) containing ε-caprolactone, in a solid state to a temperature that is not lower than 115°C and lower than 170°C and is lower than the melting point of the polyester polymer (C) to remove an organic low-boiling component (v) from the polymer (C) obtained by the polymerization.

According to a second aspect of the present invention, there is provided a method for treating a polyester polymer according to the first aspect of the present invention, characterized in that the heating of the polyester polymer (C) in a solid state is performed by flowing a gas (g) heated to a temperature that is not lower than 115°C and lower than 170°C and is lower than the melting point of the polyester polymer (C).

According to a third aspect of the present invention, there is provided a method for treating a polyester polymer according to the first or second aspect of the present invention, characterized in that the solid state is a powder form, a particle form or a flake form.

According to a fourth aspect of the present invention, there is provided a method for treating a polyester polymer according to any one of the first to third aspects of the present invention, characterized in that the temperature of heating the polyester polymer (C) in a solid state is 120 to 150°C.

According to a fifth aspect of the present invention, there is provided a method for treating a polyester polymer according to any one of the second to fourth aspects of the present invention, characterized in that the gas (g) contains 1 to 22 vol% of oxygen.

According to a sixth aspect of the present invention, there is provided a method for treating a polyester polymer according to any one of the first to fifth aspects of the present invention, characterized in that the polymer (A) is a crystalline aromatic polyester.

According to a seventh aspect of the present invention, there is provided a method for treating a polyester polymer according to any one of the first to sixth aspects of the present invention, characterized in that the melting point of the polymer (A) is not lower than 150°C.

According to an eighth aspect of the present invention, there is provided a method for treating a polyester polymer according to any one of the second to seventh aspects of the present invention, characterized in that a gas obtained after removing the organic low-boiling component (v) from a post-flow gas (g') generated by flowing the gas (g) is reused for the treatment.

According to a ninth aspect of the present invention, there is provided a method for treating a polyester polymer according to any one of the first to eighth aspects of the present invention, characterized in that the organic low-boiling component (v) comprises ε-caprolactone and/or ε-caprolactone dimer.

According to a tenth aspect of the present invention, there is provided a polyester polymer comprising a polyester polymer (C) obtained by ring-opening polymerization of a polymer (A) having hydroxyl and/or ester bonds and cyclic esters (B) containing ε-caprolactone, wherein concentrations of ε-caprolactone and ε-caprolactone dimer contained in the polyester polymer (C) are each not higher than 450 ppm.

According to an eleventh aspect of the present invention, there is provided a polyester polymer according to the tenth aspect of the present invention, wherein the concentrations of ε-caprolactone and ε-caprolactone dimer are each not higher than 100 ppm.

### BRIEF DESCRIPTION OF THE DRAWINGS

Fig. 1 is a flow sheet illustrating one embodiment of the treating method according to the present invention; and
Fig. 2 is a flow sheet illustrating another embodiment of the treating method according to the present invention.

### DESCRIPTION OF SYMBOLS

1 mixer, 2 polymer (A) feed port, 3 monomer (B) feed port, 4 reaction vessel, 5 cooling tank, 6 pelletizer, 7 hopper, 7' resin feed port, 8 treating apparatus, 9 gas feed port, 10 gas discharge port, 11 storage hopper, 11' resin discharge port, 12 low-boiling component separator, 13 resin discharge port, 14 condensed low-boiling component discharge port, 15 recycle gas outlet

### BEST MODE FOR CARRYING OUT THE INVENTION

Hereinafter, a mode for carrying out the present invention will be described.

In the present invention, a polyester polymer (C) is produced by ring-opening polymerization between a polymer (A) having hydroxyl groups and/or ester bonds and ε-caprolactone-containing cyclic esters (B) (hereinafter also referred to as "monomer (B)"). Hereinafter, each polymerization component of the polyester polymer (C) will be described.

### ε-Caprolactone-containing cyclic esters (B)

In the present invention, the ε-caprolactone-containing cyclic esters (B) include ε-caprolactone alone and a mixture of ε-caprolactone and cyclic esters other than ε-caprolactone. That is, ε-caprolactone is an essential component.

The above-mentioned cyclic esters (B) include intermolecular cyclic esters of hydroxycarboxylic acids, ε-caprolactone and other lactones.

Lactones refer to compounds having intramolecular cyclic ester structures. Therefore, specifically, lactones include ε-caprolactone, which is an essential component, and other lactones such as α,α-dimethyl-β-propiolactone, dodecanolactone, β-propiolactone, butyrolactone, valerolactone, 3-alkylvalerolactone, β,β-dialkylvalerolactone, lactones derived from hydroxycyclohexanecarboxylic acid, isocoumarin, coumarin, hydroxycoumarin, and phthalides.

These, including ε-caprolactone, can be ring-opening polymerized alone to produce polyester polymers. Alternatively, they can be copolymerized with one or more intermolecular cyclic esters of hydroxycarboxylic acids. In this case, the ratio of the intermolecular cyclic ester and lactone may be changed variously depending on the objective polymers, and making selection from various combinations of the intermolecular cyclic ester with lactone enables addition of preferred properties from both components to the resultant copolymer. This is particularly useful in decreasing and adjusting the crystallinity of the cyclic esters after the polymerization.

It should be noted that in the present invention, lactams as well as the cyclic esters (B) can be used and mixtures of the cyclic esters (B) and lactams can also be used. Lactams refer to compounds having intramolecular cyclic amide structures and specifically include ε-caprolactam, δ-valerolactam, γ-butyrolactam, β-propiolactam, and so on. Among these, ε-caprolactam, γ-butyrolactam and so on are preferably used.

The intermolecular cyclic ester of hydroxycarboxylic acids is a dehydrated and cyclic esterified product between the same kind of or different kinds of hydroxy carboxylic acid molecules. Representative examples are, for example, those represented by the general formula (1) below 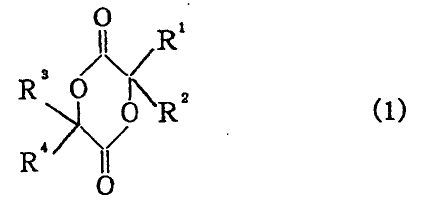 (wherein R¹, R², R³, and R⁴, whichmaybethesameordifferent, represent each a hydrogen atom, a methyl group or an ethyl group).

The hydroxycarboxylic acids include lactic acid, glycolic acid, ethylglycolic acid, and dimethylglycolic acid, α-hydroxyvaleric acid, α-hydroxyisovaleric acid, α-hydroxycaproic acid, α-hydroxyisocaproic acid, α-hydroxy-β-methylvaleric acid, α-hydroxyheptanoic acid, α-hydroxyoctanoic acid, α-hydroxydecanoic aid, α-hydroxymyristic acid, α-hydroxystearic acid, and the like.

Examples of bimolecular cyclic esters of the same hydroxycarboxylic acid include diglycolide (i.e., 1,4-dioxa-cyclohexan-2,5-dione, also referred to simply as "glycolide"), dilactide (i.e., 1,4-dioxa-3,6-diemthylcyclohexan-2,5-dione, also referred to simply as "lactide"), di(ethylglycolide), di(dimethylglycalide), and dilactides such as L-dilactide or D-dilactide obtained by intermolecular cyclic esterification of L-lactic acid or D-lactic acid, respectively, D,L-dilactide obtained by bimolecular cyclic esterification of D,L-lactic acid, and MESO-dilactide obtained by cyclic esterification of a single molecule of L-lactic acid or D-lactic acid.

Examples of cyclic esters of different hydroxycarboxylic acids include methylglycolide, α,α-dimethylglycolide, and trimethylglycolide.

In the present invention, the intermolecular cyclic esters to be used are selected by the properties of the objective polymer and two or more of them may be used in combination. For example, even when a dilactide is used as a copolymer of dilactide and diglycolide, it is not the case that L-dilactide or D-dilactide alone is used as the dilactide but two or more dilactides selected from L-dilactide, D-dilactide, D,L-dilactide, and MESO-dilactide are combined with diglycolide to realize more preferable properties of resins in moldability, transparency, and heat resistance from the viewpoint of crystallinity of resins.

In the present invention, the cyclic esters used along with ε-caprolactone preferably have a boiling point that is substantially the same as or lower than that of ε-caprolactone.

### Polymer (A) having hydroxyl groups and/or ester bonds

The polymer (A) used in the present invention which have hydroxyl groups and/or ester bonds are polymers having hydroxyl groups, polymers having ester bonds, or polymers having hydroxyl groups and ester bonds.

The polymers having hydroxyl groups include, for example, polyvinyl alcohol, starch, cellulose, and cellulose ethers. When these are used, polymers resembling those of graft polymerization tend to be obtained. In the case of polyoxyalkylene ethers, polymers resembling those of block polymerization tend to be obtained.

Furthermore, the polymers having ester bonds but no hydroxyl group include polyvinyl acetate, vinyl acetate/ethylene copolymers, polyacrylates, polyacrylate copolymers, polycarbonates and so on.

The polymers having ester bonds but no hydroxyl group and having carboxyl groups at the terminals thereof include polyester amides, aliphatic polyesters, alicyclic polyesters, crystalline aromatic polyesters, polyester elastomers composed mainly of crystalline aromatic polyesters and so on.

In the case where no terminal hydroxyl group is present on the polymer, it is preferred that a minute amount of water for hydrolyzing a portion of the ester or an additive as a promoter (alcohols, etc.) be added since the reaction rate is very low (as such an additive, a molecular weight modifier described later may be used).

The polymers having hydroxyl groups and ester bonds include partially esterified cellulose esters, polyester amides, aliphatic polyesters, alicyclic polyesters, crystalline aromatic polyesters, and the like.

These may be used as mixtures of two or more of them.

Among these, crystalline aromatic polyesters are particularly preferred.

The crystalline aromatic polyesters are constituted by one or more aromatic dicarboxylic acids selected mainly from phthalic acid, isophthalic acid, terephthalic acid; and 2,6-naphthalenedicarboxylic acid, and/or 4-hydroxybenzoic acid or 6-hydroxy-2-naphthoic acid, together with one or more aliphatic diols selected from ethylene glycol, propylene glycol, 1,3-propanediol, 1,4-butanediol, pentanediol, hexanediol, octanediol, neopentyl glycol, cyclohexanedimethanol, hydrogenated bisphenol A, xylylene glycol; polyalkylene glycols such as diethylene glycol, triethylene glycol, dipropylene glycol, dibutanediol, and polytetramethylene glycol. 4-aminobenzoic acid and so on may be contained as minor components.

Preferably, the crystalline aromatic polyesters have melting points not lower than 180°C. Specifically, they include polyethylene terephthalate, polybutylene terephthalate, polyethylene naphthalate, polybutylene naphthalate and polyester elastomers constituted notably by these.

Also, aliphatic dicarboxylic acids selected from succinic acid, adipic acid, azelaic acid, sebacic acid, brassylic acid, cyclohexanedicarboxylic acid, and dimer acid may be used as the dicarboxylic acid component within a range where it occupies not exceeding 10 mol% of total dicarboxylic acid component in terms of molar fraction.

Those crystalline aromatic polyesters whose terminal groups are substantially hydroxyl groups or carboxyl groups are preferably used.

As the polymer (A) in accordance with the present invention, the above-mentioned polymers or mixtures of two or more of them may be used without any particular limitation. Those having sufficient strength as molded articles are preferred.

The polymer (A) is preferably one having a relatively large molecular weight, specifically a weight-average molecular weight (Mw) of 5, 000 to 300, 000, more preferably a weight-average molecular weight of 10,000 to 200, 000. In particular, in the case where the melt viscosity under a charge mixing condition exceeds 2,000 poises, mixing with cyclic esters becomes more difficult and the melt viscosity of the polymer (C) obtained becomes high, so that the above-mentioned molecular weight ranges can exhibit the effect of the present invention more markedly and thus are preferable.

### Polyester polymer (C)

Thepolyester polymer (C) can be obtainedbymixing and stirring, for example, the above-mentioned ε-caprolactone-containing cyclic esters (B) and the polymer (A) having hydroxyl groups and/or ester bonds in a heat-molten state.

The charge ratio of the polymer (A) to the monomer (B) upon the reaction may vary depending on the properties of the objective polymer (C). The weight ratio of (B) / (A) is usually 99/1 to 1/99, preferably 5/95 to 75/25, more preferably 10/90 to 60/40.

The reaction temperature of ring-opening polymerization reaction may vary depending on raw materials to be used. It is 125 to 200°C, preferably 150 to 190°C in the case where the cyclic esters (B) containabimolecular cyclic ester. It is 150 to 300°C, preferably 180 to 250°C in the case where the cyclic esters are formed of lactones alone. The reaction temperature is preferably from a temperature 15°C lower than the melting point or softening temperature of the polymer (A) to a temperature 50°C higher than it, more preferably from the softening temperature or melting point to a temperature 20°C higher than it. Specifically, the reaction temperature is 125 to 300°C, preferably 150 to 260°C. In particular, in the case where crystalline aromatic polyesters are used, the reaction temperature is 180 to 300°C, preferably 225 to 260°C.

The ring-opening polymerization reaction of the monomer (B) with the polymer (A) is performed under an inert gas or in a state where the reaction vessel is filled with the polymerization component, that is, in a state where substantially no gaseous phase is present. Preferably, the pressure at the time of reaction is at atmospheric pressure or under pressure.

The reaction rate of monomer (B) , particularly ε-caprolactone, may be set up optionally. When the reaction rate of monomer (B) is high, the polymerization rate of cyclic esters decreases while the reactions of ester exchange, or the like proceed. Therefore, in the case where a crystalline aromatic polyester is used as the polymer (A) , themeltingpoint of polymer (C) decreases. The reaction rate of monomer (B) is preferably 75 to 99 mol%, more preferably 90 to 97.5 mol%.

The concentration of remaining ε-caprolactone in the reaction system at the time of completion of reaction (i.e., crude polymer (C)) is 0.3 to 10% by weight, preferably 1 to 5% by weight, and the concentration of remaining caprolactone dimer is 0.05 to 1% by weight, preferably 0.1 to 0.5% by weight.

The reaction time may vary depending on the kinds and ratios of the raw materials used, reaction temperature, and target reaction rate and generally, it is 0.2 to 10 hours, preferably 0.5 to 5 hours, and more preferably 0.5 to 2 hours.

The maximum reaction pressure in the system is 2 to 200 kg/cm², preferably 2 to 50 kg/cm², and more preferably 2 to 20 kg/cm².

Such a ring-opening polymerization reaction is possible without catalysts but generally it may be performed in the presence of catalysts that can be used in ring-opening polymerization reactions, esterification reactions or interesterification reactions. Particularly preferred catalysts include metals such as lithium, sodium, potassium, cesium, magnesium, calcium, barium, strontium, zinc, aluminum, titanium, cobalt, germanium, tin, lead, antimony, arsenic, cerium, cadmium, andmanganese, as well as organic metal compounds, organic acid salts, alkoxides, halides, etc. thereof. Particularly preferred ones include organotin, organoaluminum and organotitanium compounds, specifically, organotin carboxylates, organotin halides, tin carboxylates, tin halides, triisobutylaluminum, aluminum trialkoxylates, tetrabutyl titanate, germanium dioxide, antimony trioxide, or the like. These catalysts may be used as combinations of two or more of them.

Further, in such a polymerization reaction, depending on the purposes, use of a molecular weight regulator (chain transfer agent) such as water, lactic acid, glycolic acid and other alcohols or carboxylic acids, and compounds as a functional group having three or more functional groups selected from a carboxyl group, a hydroxyl group and other ester forming groups can give rise to polymers with low molecular weights. Furthermore, other polymer additives generally used such as antioxidants, ultraviolet absorbers, and plasticizers may also be used without particular limitations. They can be added to the reaction system during the reaction.

Also, during the reaction, not only the aforementioned copolymerizable components but also isocyanates, acid anhydrides, compounds having an epoxy group, and the like can further be added and the properties of the polymer can be improved.

The ring-opening polymerization reaction of monomer (B) to monomer (A) is performed by using a reaction vessel of batch type, semi-batch type or continuous type. In the case of batch type, the reaction rate of monomer (B) changes with a lapse of time at the time of taking out the resin and thereafter the remaining amount of monomer (B) in the polymer (C) changes. Therefore, it is preferred that the reaction is performed by a continuous type reaction. In addition, stabilization of heating time, heating temperature, etc. can stabilize the resin obtained by a continuous polymerization reaction, with respect to the color, molecularweight, melting point, or the like. thereof between the lots.

The polymer (C) thus obtained (which means a crude polymer, but is referred to simply as polymer (C) unless any confusion occurs) contains unreacted ε-caprolactone and caprolactone dimer. It is difficult to decrease ε-caprolactone to a level where substantially none of it exists by a ring-opening reaction. Usually, the rate of ring-opening polymerization reaction is proportional to the concentration of ε-caprolactone remaining in the reaction system; the rate of decrease of ε-caprolactone at the end of the reaction is very slow. There is a possibility that ε-caprolactone will be regenerated by depolymerization reaction at the terminal of polycaprolactone after the polymerization. It is considered that this also adds to the difficulty of decreasing the concentration of ε-caprolactone to the extremity. It is considered that at the same time caprolactone dimer is producedpossiblyby the same reaction as above. Since the caprolactone dimer causes problems such as bleed out on the surface at the time of melt processing because of its low molecular weight, it is a substance to be removed like ε-caprolactone.

The weight-average molecular weight of polyester polymer (C) , which depends on the weight average molecular weight of polymer (A) and constitutional ratio of polymer (A) to monomer (B) , is 5,000 to 500,000, preferably 10,000 to 300,000.

In the present invention, since the obtained polymer (C) contains a low-boiling component (v), heated gas (g) is flown to the polymer (C) in a solid state to remove the low-boiling component (v). For this purpose, the polymer (C) is converted into powder, particulate, flake, strand or the like form, preferably powder or particle form (hereinafter also referred to as "powder/particle". The size (reduced diameter) of powder/particle is 0.01 to 10 mm, preferably 0.1 to 5 mm. If the size of powder/particle is too large, it becomes difficult to remove the low-boiling component. On the other hand, the smaller the size of the powder/particle, the greater the surface area thereof and removal of the low-boiling component (v) becomes easier. However, if it is too small, production and handling of the powder/particle becomes difficult.

The melting point of polymer (C) is preferably 150°C or more, more preferably 170°C or more. If the melting point is lower than this, the polymer becomes softened during the treatment and further addition of self-weight causes blocking of polymer (C) in the form of powder/particle, which becomes a problem. The treatment method of the present invention involves treatment in a solid state and hence it is unnecessary to heat the polymer to a temperature not lower than the melting point of the polymer, so that the melting point of the polymer may be high. Rather, in the case of polymers whose melting point is above 200°C, it becomes necessary that the monomer removal treatment in a molten state be performed at high temperatures, if such must be performed. Therefore, the higher the melting point of the polymer, the more it exhibit the effect of the method of the present invention

The gas (g) to be used in the method of the present invention is oxygen, an oxygen-containing gas such as air or an inert gas such as nitrogen, helium, and argon. In the case where the treating temperature is high and deterioration of physical properties and coloring due to the effect of oxygen become problems, use of inert gasesispreferred. Inthepresentinvention, sinceitisunnecessary to promote the polycondensation reaction, treatment at lower temperatures is possible. Therefore, it is possible to use an oxygen-containing gas, for example, air, and thus the present invention is excellent from an economical point of view.

Furthermore, in the case where an oxygen-containing gas is used, the color of polymer (C) after the treatment is improved. Therefore, in the present invention, it is desired that a gas (g) having an oxygen concentration of 1 to 22 vol% be used. This oxygen concentration is set up in a range where no problem on safety occurs in consideration of the amount of low-boiling component (v).

The gas (g) may contain moisture but it is preferred that dehumidification be performed by compression, cooling, adsorption and the like operations before it can be used.

The temperature of gas (g) to be used in the present invention is from 115 to lower than 170°C, preferably 165°C or lower, more preferably 120 to 150°C. If the temperature of gas (g) is lower than the above-mentioned temperature, it becomes difficult to sufficiently decrease the concentration of the low-boiling component (v), particularly caprolactone dimer, while if it is higher than this, the physical properties of the polymer (C) change, so that it becomes difficult to maintain the physical properties stable.

The treating temperature in the present invention is very low as compared with the polymerization temperature in ordinary solid phase polymerizations, so that the step of cooling the polymer (C) after the treatment is unnecessary or can be performed in a short time.

In the present invention, the optimal value of flow rate of gas (g) may vary depending on the shape of polymer (C) and flow apparatus and is 100 to 10,000 times the bulk volume of solid form polymer (C) per hour. If the flow rate of gas is small, the volatilization rate of low-boiling component (v) decreases, while if it is too large, this results in economical disadvantages.

It is sufficient that the apparatus used in the treatment of the present invention is capable of allowing actual contact between the heated gas (g) and solid form polymer (C) and is preferably one that is further adapted to allow the whole treatment to be uniformly performed. The apparatus may be of a reaction vessel type having stirring vanes or the apparatus itself may vibrate and rotate to effect stirring. Furthermore, it may be cylindrical or of a tower type. Such apparatuses are used preferably for continuous type treatments. Furthermore, even if it is an apparatus of a tower type that does not positively stir the powder/particle, it is just needed that the apparatus be designed to uniformly flow the circulating gas. Furthermore, it may be a drier of a shelf type. It is desirable that the apparatus be designed so that the temperature of polymer (C) can be sufficiently elevated within a predetermined temperature range by use of a heat insulating material or the like. Furthermore, the apparatus may be provided with a jacket or the like and heated to similar temperature to the gas temperature with vapor, a heating medium or the like, or to a temperature higher or lower than the gas temperature within a range where the effects of the present invention can be obtained. On the other hand, the pressure inside the apparatus may be increased pressure, atmospheric pressure or reduced pressure, but atmospheric pressure or reduced pressure is preferred.

The time required for the treatment method of the present invention is not particularly limited and is set up preferablybetween 2 to 10 hours. The actual treating time may vary depending on the kind and oxygen concentration of gas, gas temperature, flow rate of gas, etc. and is set up within a range where the target value of concentration of the low-boiling component and physical properties of resin in the product polymer (C) are not substantially changed and further in consideration of improvement target value of color.

In the present invention, to use the gas after the treatment of polymer (C) for recycling, a step of removing a low-boiling component (v) from the gas (g') that comes out from a gas discharge port by operation of cooling, condensation, adsorption or the like is essential. Furthermore, an operation of temporarily holding the condensed low-boiling component (v) and further withdrawing it, is performed as the case may be.

In the present invention, it is preferred that the gas (g) is fed and discharged continuously. However, no particular limitation is imposed on the method of heating and feeding the gas (g). For example, the gas heated to a predetermined temperature through a heat exchanger is fed to a treating apparatus by using a compressor, a blower or the like, or by making use of the elevation in pressure by the pressure upon storage of gas or heating.

On the other hand, the solid form polymer (C) may be treated in a batch manner, in a continuous manner, or in an intermittent manner. When it is treated intermittently, there occurs distribution in treating time. However, in the prevent invention, as long as the concentration of low-boiling component is sufficiently reduced, the change in the physical properties of resin due to a difference in treating time causes no problem in terms of the quality of the products.

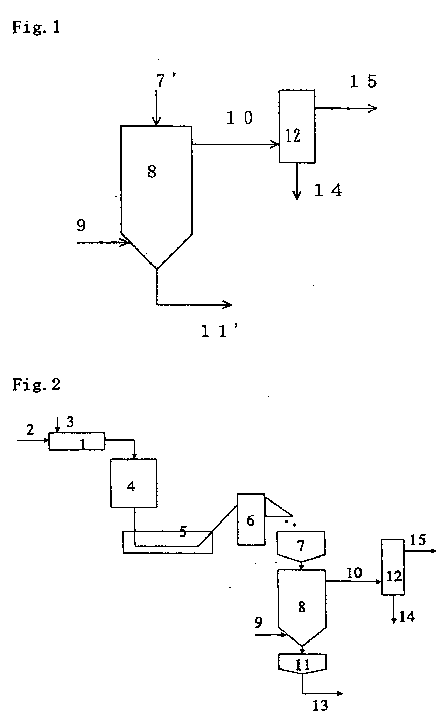

Next, the present invention will be illustrated with reference to the attached drawings. Fig. 1 is a flow sheet illustrating one embodiment of the present invention.

First, a treating apparatus 8 has a resin feed port 7' , a resin discharge port 11', a gas feed port 9 and a gas discharge port 10. Here, the "resin" means a solid form crude polymer (c) such as powder/particle. The resin feed port and resin discharge port may be the same depending on the apparatus, for example, in the case where batch type treatment is performed. The gas (g') coming out of the gas discharge port is fed to an organic low-boiling component separator 12, where the low-boiling component (v) is removed therefrom by cooling, condensation, adsorption or the like, and is then recycled. The low-boiling component (v) separated in the separator 12 is discharged from the apparatus 12 through a condensed low-boiling component discharge port 14 in a batch manner or in a continuous manner. In the case where the condensed low-boiling component is discharged from the apparatus 12 in a batch manner and where the treatment of the present invention is continuously performed, it is preferred that two or more apparatuses 12 are used in parallel with alternately switching them from one for the treatment to another for regeneration accompanied by discharge. The polymer (C) converted into the state of powder/particle is fed and discharged in division or continuously to an apparatus 8. The gas (g) is fed through the gas feed port 9 in a state where it is preliminarily heated and discharged from the gas discharge port 10.

The present invention will be further illustrated by referring to one embodiment in which the process including the ring-opening polymerization is continuously performed by using Fig. 2. 'The polymer (A) in a heat molten state or in a solid state and the monomer (B) at ambient temperature or preliminarily heated are continuously fed through respective feed ports 2 and 3 to a mixer 1 capable of heating, mixing and stirring. The mixed and preheated raw materials are continuously fed to a reaction vessel 4, where polymerization reaction is allowed to proceed until the objective rate of reaction is reached, and then pelletized through a cooling tank 5 and a pelletizer 6. The pellets thus obtained are stored in a hopper 7 or fed to the treating apparatus 8 without being stored therein. The gas heated to a predetermined temperature is continuously fed to and discharged from the treating apparatus 8. The pellets discharged from the treating apparatus 8 are thereafter discharged into a hopper 11.

By such a treatment, the amounts of ε-caprolactone and caprolactone dimer contained in the polymer can be reduced to such amounts that substantially none of them exists in an economical manner while keeping the physical properties of resin in the obj ective polymer (C) stable. That is, the concentrations of ε-caprolactone and caprolactone dimer in the polymer (C) after the treatment of the present invention are each not higher than 450 ppm and further each not higher than 100 ppm. According to the present invention, polyester polymers having excellent stability in color and physical properties of resin (that is, the physical properties of resin will not substantially change) and having low contents of low-boiling component can be obtained.

The phrase "physical properties of resinwill not substantially change" as used herein means that the degree of decreases in molecular weight (or reduced specific viscosity which correlates to molecular weight), molecular weight distribution value [(ratio Mw/Mn of weight-average molecular weight (Mw) to number-average molecular weight (Mn)], acid value, and melting point as factors affecting flowability, mechanical strength, and the like, is maintained in a predetermined range by the treating method of the present invention. Specifically, for the polymer (C) before and after the treating method of the present invention, the ratio (value after the treatment/value before the treatment) of reduced specific viscosities is within 5%, the ratio (value after the treatment/value before the treatment) of Mw/Mn is within 5%, the ratio (value after the treatment/value before the treatment) of acid values is within 5%, and the degree of decrease (value before the treatment - value after the treatment) in melting point is 3°C or less.

Note that the acid value increases when heat decomposition, hydrolysis or the like occurs while it decreases when polycondensation reaction proceeds, so that it serves as an index for the stability of physical properties of a resin. At high temperatures, interesterification reaction proceeds to cause a decrease in the melting point and hence a decrease in melting point also serves as an index for the stability of physical properties of a resin.

The phrase "the polymer (C) having excellent stability in color" as used herein means that the evaluation values of color, YI, L, a and b of the resin obtained after the heat treatment are substantially the same or close to those of the resin before the heat treatment.

### EXAMPLES

Hereinafter, the present invention will be illustrated in detail by examples. However, the present invention should not considered to be limited thereto.

Note that all % and parts indicate % by weight and part by weight unless otherwise described specifically.
(1) Melting point
   By using a differential scanning calorimeter (DSC) melting peak temperature (Tpm) was obtainedasameltingpointanda difference between a melting initiation temperature (Tim) and a melting end point (Tem) was obtained as a melting point dispersion according to JIS K7121.
(2) Concentration of E-caprolactone, concentration of caprolactone dimer
   A gas chromatograph GC-14A manufactured by Shimadzu Corporation was used and a glass column having an inner diameter of 3.2 mm and a length of 2.1 m packed with 10% PEG 20 M (liquid phase)/Uniport HPS (carrier) was used. 0.5 g of a sample and 0.1 g of diphenyl ether as an internal standard substance were exactly weighed and dissolved in 20 g of HFIP (hexafluoroisopropanol). After holding the mixture at a constant temperature of 180°C for 8 minutes, the temperature was slowly elevated to 220°C and when it reached 220°C, it was further kept stable. The results obtained by measurement by using nitrogen as a carrier were calculated according to the internal standard method to obtain the concentration of ε-caprolactone and that of caprolactone dimer in terms of % by weight.
(3) Molecular weight distribution
   GPC measurement was performed to obtain number-average molecular weight and weight average molecular weight according to the standard PMMA conversion method and then a molecular weight distribution (Mw/Mn) was obtained from their ratio. GPC measurement was performed by using columns Shodex GPC HFIP-800P, HFIP-805P, HFIP-804P, and HFIP-803P manufacturedby Showa Denko K. K. , a detector RID-6A manufactured by Shimadzu Corporation, and HFIP as eluant at a column temperature of 50°C and at a flow rate of 1.0 ml/min.
(4) Reduced specific viscosity
   This was measured under the following conditions.
   Solvent: Phenol/tetrachloroethane (weight ratio) = 6/4
   Concentration of sample: 50 mg/25 ml
   Measuring temperature: 30°C
(5) Acid value
   1.0 g of a sample was weighed and dissolved in 50 g of benzyl alcohol by heating at 160°C. After water-cooling, 50 g of chloroform was added for mixture, followed by titration-measurement by using phenolphthalein as an indicator and a 1/10 N KOH ethanol solution. As for dissolving times, appropriate three points were selected from between 10 to 30 minutes and a value when extrapolation was made at 0 minute of dissolving time was obtained. From this value, the acid value (blank value) of a mixture of 50 g each of benzyl alcohol and chloroform separately measured was subtracted to obtain a value that is defined as an acid value of sample (mgKOH/g).
(6) Color
   This was measured by using a differential colorimeter Σ-90 manufactured by Nippon Denshoku Industries Co., Ltd.

### Evaluated values of color

YI: This indicates a yellow index. The smaller the numerical value of yellow index, the more excellent the color.

L: This means brightness. The larger numerical value thereof indicates increased brightness (becoming whiter) while the smaller numerical value indicates increased darkness (becoming blacker).

a: This means chromaticity representing color and saturation. Increased positive value indicates more intense redness while larger absolute value of the negative value indicates more intense greenness.

b: This means chromaticity representing color and saturation. Increased positive value indicates more intense yellowness while larger absolute value of the negative value indicates more intense blueness.

### [Production Example 1]

60 parts of molten polytetramethylene terephthalate having a hydroxy terminal (manufactured by Polyplastics Co., Ltd.) and 40 parts of ε-caprolactone were charged in a reaction vessel and after purging with nitrogen gas, they are allowed to react at 230°C for 1.5 hours with stirring to obtain a crude polyester polymer. In a state where the stirring was stopped, the reaction vessel was pressurized with nitrogen and the crude polyester polymer was taken out in the form of strands from the reaction vessel through a valve arranged at the bottom thereof, which strands were cut into pellets after cooling. The obtained crude polyester polymer had a melting point of 205.1°C, a reduced specific viscosity of 1.350, an acid value of 3.13, and a molecular weight distribution value of 2.05. As for its color, YI was 29.4, L was 84.2, a was 4.5 and b was 15.2. The crude polyester polymer contained 1.430 wt% of ε-caprolactone and 1550 ppm of caprolactone dimer. The pellets had a bulk specific gravity of 0.80 and an average particle diameter (reduced diameter) of 2.9 mm. Note that no low melting point peak attributable to a polycaprolactone homopolymer was observed by DSC.

### [Production Example 2]

Installment for continuous ring-opening polymerization consists of a twin-screw extruder (30 mmφ, L/D=42) for charging a raw material polymer (A) with a vent port, piping for feeding ε-caprolactone connected to the vent port, a Sulzer mixer SMX with L/D = 9 manufactured by Sulzer Co. as a static mixer, a die arranged at the outlet port of the static mixer through a gear pump, and a pelletizer for cutting the strands extruded from the die into pellets after cooling.

While retaining the above-mentioned extruder at 250°C by heating, the same polytetramethylene terephthalate as used in Production Example 1 was fed from the resin feed port at 12 kg/Hr and heat molten at 240°C (temperature of the static mixer and die) under nitrogen. From the vent port arranged in the midway of the extruder, ε-caprolactone was fed at 8 kg/Hr and mixed and stirred in the extruder. The obtained crude polyester polymer had a melting point of 209.3°C, a reduced specific viscosity of 1.405, an acid value of 2.97, and a molecular weight distribution value of 1.95. As for its color, YI was 23.4, L was 88.2, a was 2.7 and b was 8.9. The crude polyester polymer contained 1.820 wt% of ε-caprolactone and 1350 ppm of caprolactone dimer. The pellets had a bulk specific gravity of 0.80 and an average particle diameter (reduced diameter) of 2.9 mm. Note that no low melting point peak attributable to a polycaprolactone homopolymer was observed by DSC.

### [Example 1]

15 kg of pellets of the crude polyester polymer obtained in Production Example 2 was introduced at a time into an apparatus having a heat medium jacket and a horizontally arranged stirring axle, which is capable of feeding heated gas through one end thereof and discharging gas through the other end thereof. Air (preliminarily dried so as to have a dew point of -40°C by a dehumidifier) heated to 120°C was continuously fed at atmospheric pressure at a rate of 2.0 m³/hour through the gas feed vent port (in this case, the temperature of resin was substantially the same as the temperature of gas) and at the same time a gas containing a low-boiling component was continuously discharged from the gas discharge port. The discharged gas was passed through a condenser kept at 10°C and then through an adsorption tower packed with a molecular sieve to condense and separate the low-boiling component, and then was discharged. At the lower part of the condenser, a tank was arranged where the condensed low-boiling component was temporarily stored and discharged from the bottom of the tank through a valve. After performing the treatment with the heated gas for 10 hours, the tank was cooled and resin pellets were taken out. The analytical values of the obtained polyester polymer are shown in Table 1. The concentration of ε-caprolactone and that of caprolactone dimer in the polyester polymer during the treatment were monitored by sampling at constant time intervals to confirm chronological changes. At the same time, moisture concentrations were obtained by using a Karl Fischer moisture titrator (the measurement is performed by treatment at 200°C for 20 minutes in a vaporizer) and their chronological changes were confirmed.

In Table 1, the monomer concentration indicates the concentration of ε-caprolactone and the dimer concentration indicates the concentration of caprolactone dimer. ND indicates "below detection limit", which is at least 50 ppm or less. Table 2 shows the results.

### [Example 2]

Studies were made in the same manner as in Example 1 except that air was replaced by nitrogen. The analytical values of the obtained polyester polymer are shown in Table 1.

### [Example 3]

Air (preliminarily dried so as to have a dew point of -40°C by a dehumidifier) heated to 130°C was continuously fed at atmospheric pressure to a hopper-drier type tower-drier having 100 liter by volume at a rate of 80 m³/hour and at the same time a gas was continuously discharged from the gas discharge port. The discharged gas was passed through a condenser kept at 10°C and then through an adsorption tower packed with a molecular sieve. The pellets obtained in Production Example 2 were continuously fed at room temperature to the tower drier through the upper part thereof and at the same time pellets were continuously discharged through the lower part of the apparatus so that the retention time becomes 6 hours. Table 1 shows the analytical values of the obtained polyester polymer after the treatment became sufficiently stable (that is, in a stationary state where the feed and discharge of pellets became stationary and the gas temperature and resin temperature have become substantially equal to each other).

### [Comparative Example 1]

After performing ring-opening polymerization in the same manner as in Production Example 1, a vacuum pump connected to a reaction vessel through a cold trap was activated at 230°C with stirring to slowly increase the degree of pressure reduction in the reaction vessel and a degree of pressure reduction of 0.5 torr was reached after about 30 minutes. In this state, the reaction vessel was kept under reduced pressure for additional 1 hour to remove a low-boiling component. After stopping the stirring, the reaction vessel was pressurized with nitrogen and the resin was taken out in the form of strands from the reaction vessel through a valve arranged at the bottom thereof. The strands were cut into pellets after cooling. The analytical values of the obtained polyester polymer are shown in Table 1.

### [Comparative Example 2]

Treatment was performed in the same manner as in Example 1 except that air heating temperature was set to 110°C and treating time was set to 12 hours.

### [Comparative Example 3]

A twin-screw extruder (30 mmφ, L/D = 28) having: a kneader part with four vent ports which substantially performs melting of pellets; and a screw part for performing removal of a low-boiling component was kept at 230°C and the pellets obtained in Production Example 2 were fed thereto through a resin feed port at room temperature at a rate of 5 kg/Hr. After confirming the discharge of resin, the low-boiling component was removed while keeping the inside of the twin-screw extruder under reduced pressure by a vacuum pump connected to each vent portion through a cold trap. While keeping the degree of pressure reduction stable at 0.5 torr, after about one hour, the resin taken out in the form of strands was cooled and cut into pallets. The analytical values of the obtained polyester polymer are shown in Table 1.

### [Comparative Example 4]

A twin-screw extruder (30 mmφ, L/D = 42) having: a kneader part with six vent ports which substantially performs melting of pellets; and a screw part for performing removal of a low-boiling component was kept at 230°C and the pellets obtained in Production Example 2 were fed therein through a resin feed port at room temperature at a rate of 5 kg/Hr. After confirming the discharge of resin, the low-boiling component was removed in the same manner as in Comparative Example 3. While keeping the degree of pressure reduction stable at 0.5 torr, after about one hour, the resin taken out in the form of strands was cooled and cut into pallets. The analytical values of the obtained polyester polymer are shown in Table 1.

### [Comparative Example 5]

Treatment was performed in the same manner as in Example 1 except that highly purified nitrogen gas was used, heating gas temperature was set to 180°C, and treating time was reduced to 4 hours. The analytical values of the obtained polyester polymer are shown in Table 1.

### [Comparative Example 6]

The same apparatus as used in Example 1 was employed except that the gas feed port was closed gas-tight and was connected from a gas discharge port to the vacuum pump through a condenser and an adsorption tower. In a state where the degree of vacuum was kept at 0.5 torr, the temperature of jacket was adjusted to 180°C and treatment is performed for 10 hours. After cooling, the polyester polymer thus taken out was analyzed and the analytical values are shown in Table 1.

### [Comparative Example 7]

Treatment was performed in the same manner as in Comparative Example 6 except that processing temperature was set to 120°C. The analytical values of the obtained polyester polymer are shown in Table 1.

According to the present invention, it was possible to reduce the concentration of low-boiling component such as ε-caprolactone or caprolactone dimer in polyester polymers without adversely affecting the physical properties of the polyester polymers. For example, block copolymers of ε-caprolactone and a crystalline aromatic polyester have rubber elasticity and high heat resistance and hence are widely used for various molded articles, films, threads, impact strength modifiers for polyesters and the like, and compatibilizers forpolyester alloys. Since they exhibit no monomer smell and migration to the resin surface of low-boiling component, they can also be used for medical applications and food packaging applications.

### INDUSTRIAL APPLICABILITY

The present invention provides a more economical method for decreasing concentrations of unreacted monomers and lactone dimer to the extremity in a polyester polymer obtained by ring-opening polymerization of a polymer having hydroxyl groups and/or ester bonds and ε-caprolactone while preventing changes in the physical properties of the resin as much as possible and further preventing deterioration of the color of resin or in some cases improving it.

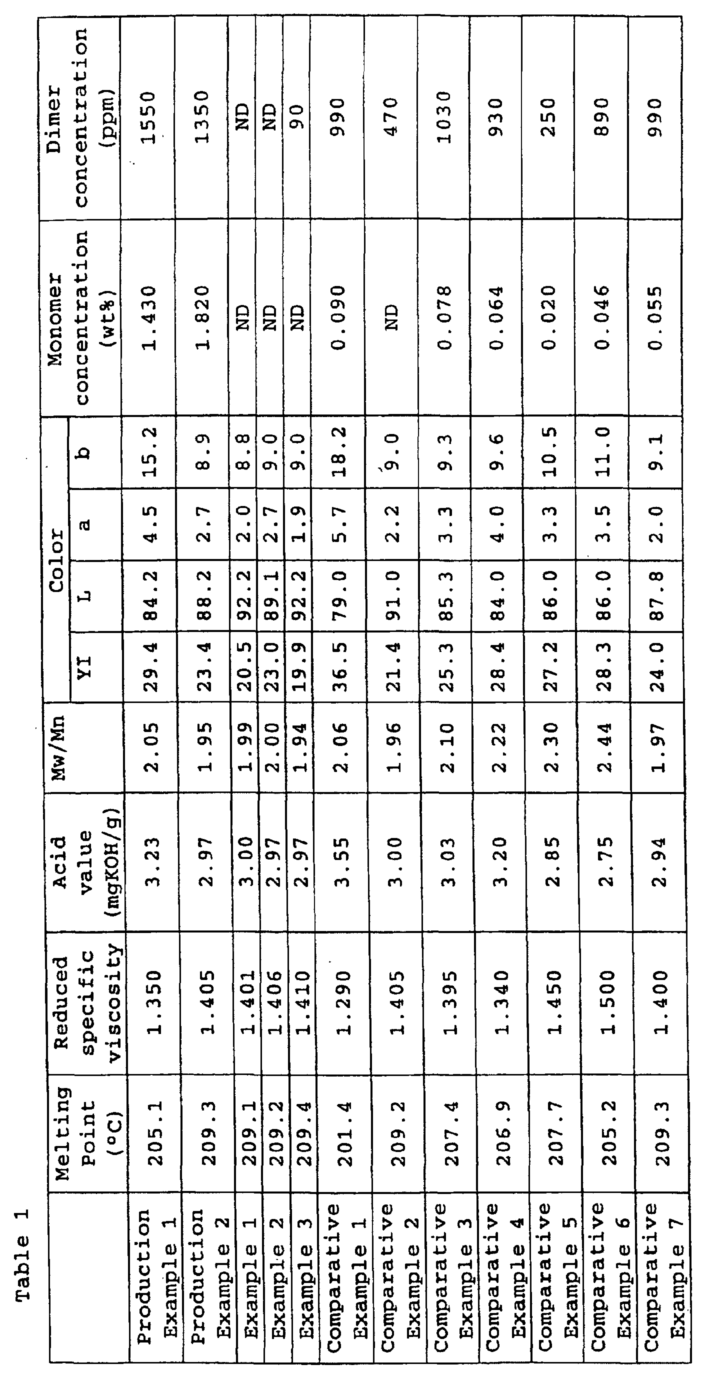

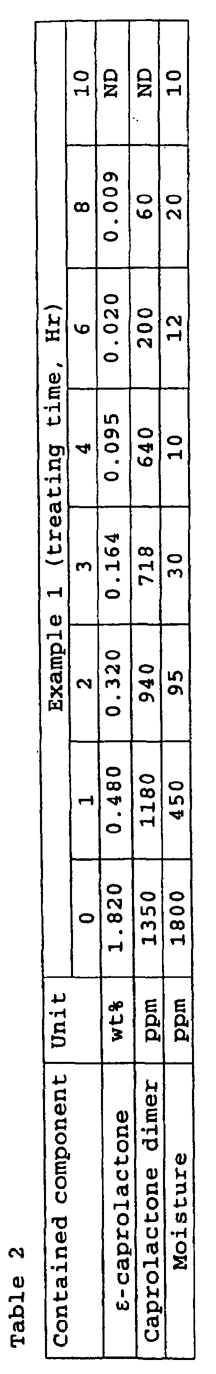

## Claims

1. A method for treating a polyester polymer which comprises heating a polyester polymer (C), which is obtained by ring-opening polymerization of a polymer (A) having hydroxyl and/or ester bonds and cyclic esters (B) containing ε-caprolactone, in a solid state to a temperature that is not lower than 115°C and lower than 170°C and is lower than the melting point of the polyester polymer (C) to remove a low-boiling component (v) from the polymer (C) obtained by the polymerization.

2. A method for treating a polyester polymer according to claim 1, **characterized in that** the heating of the polyester polymer (C) in a solid state is performed by flowing a gas (g) heated to a temperature that is not lower than 115°C and lower than 170°C and is lower than the melting point of the polyester polymer (C).

3. A method for treating a polyester polymer according to claim 1 or 2, **characterized in that** the solid state is a powder form, a particle form or a flake form.

4. A method for treating a polyester polymer according to any one of claims 1 to 3, **characterized in that** the temperature of heating the polyester polymer (C) in a solid state is 120 to 150°C.

5. A method for treating a polyester polymer according to any one of claims 2 to 4, **characterized in that** the gas (g) contains 1 to 22 vol% of oxygen.

6. A method for treating a polyester polymer according to any one of claims 1 to 5, **characterized in that** the polymer (A) is a crystalline aromatic polyester.

7. A method for treating a polyester polymer according to any one of claims 1 to 6, **characterized in that** the melting point of the polymer (A) is not lower than 150°C.

8. A method for treating a polyester polymer according to any one of claims 2 to 7, **characterized in that** a gas obtained by removing the low-boiling component (v) from a post-flow gas (g') generated by flowing the gas (g) is reused for the treatment.

9. A method for treating a polyester polymer according to any one of claims 1 to 8, **characterized in that** the low-boiling component (v) comprises ε-caprolactone and/or ε-caprolactone dimer.

10. A polyester polymer which comprises a polyester polymer (C) obtained by ring-opening polymerization of a polymer (A) having hydroxyl and/or ester bonds and cyclic esters (B) containing ε-caprolactone, wherein concentrations of ε-caprolactone and ε-caprolactone dimer contained in the polyester polymer (C) are each not higher than 450 ppm.

11. A polyester polymer according to claim 10, wherein the concentrations of ε-caprolactone and ε-caprolactone dimer are each not higher than 100 ppm.
